# EUROPÄISCHE PATENTSCHRIFT

(11) **EP 1 163 485 B1**
(45) Veröffentlichungstag und Bekanntmachung des Hinweises auf die Patenterteilung: **30.07.2003**
(21) Anmeldenummer: 00920492.6
(22) Anmeldetag: 13.03.2000
(51) Int. Cl.: F41H 3/02

(54) **UNIVERSELLES TARNMATERIAL FÜR TARNKLEIDUNG UND ZUR TARNUNG**
UNIVERSAL CAMOUFLAGE MATERIAL FOR CAMOUFLAGE CLOTHING AND FOR CAMOUFLAGE
MATIERE DE CAMOUFLAGE UNIVERSELLE POUR TENUE DE CAMOUFLAGE ET UTILISEE A DES FINS DE CAMOUFLAGE

(30) Priorität: 13.03.1999 DE 19911227
(43) Veröffentlichungstag der Anmeldung: 19.12.2001
(73) Patentinhaber: Stamoid AG, 8193 Eglisau (CH); Lanz-Anliker AG, 4938 Rohrbach (CH)
(72) Erfinder: BECHTOLD, Willi, CH-8193 Eglisau (CH); WENGER, Adrian, CH-8193 Eglisau (CH)
(74) Vertreter: Herden, Andreas F.
(86) Internationale Anmeldenummer: EP0002172
(87) Internationale Veröffentlichungsnummer: WO00055566

(56) Entgegenhaltungen:
- WO-A-97/45693
- DE-B- 1 088 843
- FR-A- 2 293 685
- FR-A- 2 493 504
- GB-A- 903 036
- US-A- 4 469 745
- US-A- 5 695 835

## Beschreibung

Die Erfindung betrifft eine Tarnschicht, ein Tarnmaterial und ein Tarnkleidungsstück gemäß den Merkmalen der Ansprüche 1, 8 und 18 zur Tarnung vorzugsweise für das sichtbare Spektrum, das nahe, das mittlere und das ferne Infrarot und das Radarwellenspektrum.

Es sind verschiedene Tarnschichten bekannt die zur Tarnung unterschiedlicher Objekte in den oben bezeichneten Wellenlängenbereichen eingesetzt werden. Dabei weisen diese Tarnschichten in der Regel eine Metallbeschichtung und eine Garnierung auf, mittels derer sowohl eine Tarnung im Infrarot- als auch im Radarwellenspektrum ermöglicht werden sollen. Solche Tarnschichten werden insbesondere für Überwürfe bzw. Tarndecken eingesetzt. Sie eignen sich im allgemeinen jedoch nicht zur Verwendung bei z.B. Tarnanzügen oder anderen Kleidungsstücken. Für eine Tarnung bei Kleidungsstücken sind dem Stand der Technik Tarnschichten zu entnehmen, die in Form von Strauch- oder Blattwerkimitationen mit entsprechender Farbgebung eine Tarnung sowohl im sichtbaren und im infraroten Spektralbereich als auch im Radarwellenbereich erzielen wollen. Die beschriebenen Tarnschichten werden beispielsweise von der Custom Concealment, Inc. und der Teledyne Brown Engineering angeboten. Beispiele von bekannten Tarnschichten sind den Dokumenten FR-A-2 493 504 und WO-A-9 745 693 entnehmbar.

Bei den benannten Tarnschichten ist insbesondere nachteilig, daß die weit abstehenden Zotteln oder Blätter eine Behinderung für den Träger bei seiner Bewegung im Feld darstellen, ferner weisen diese eine im Vergleich hohe Masse auf und können darüber hinaus nicht oder nur sehr schwer auf ein in einen Rucksack passendes Volumen zusammengelegt werden. Auch hat sich gezeigt, daß sich die dem Stand der Technik zu entnehmenden Tarnschichten gerade und insbesondere bezüglich der heutzutage kommerziell leicht erhältlichen Infrarot-Nachtsichtgeräte nur eine ungenügende Tarnung ermöglichen.

Der Erfindung liegt daher die Aufgabe zu Grunde, eine universell einsetzbare Tarnschicht bzw. einsetzbares Tarnmaterial bereitzustellen, welches unter weiter verbesserter Tarnung insbesondere im Infraroten und im Radar-Bereich obige Nachteile vermeidet.

Die Lösung dieser Aufgabe erfolgt auf höchst überraschende Weise bereits durch die Merkmale der Ansprüche 1 und 8.

Indem eine Tarnschicht zur Tarnung, vorzugsweise für das sichtbare Spektrum, das nahe, das mittlere und das ferne Infrarot und das Radarwellenspektrum bereitgestellt wird, wobei die Tarnschicht eine Garnierung aufweist und die Garnierung eine Verzahnungsstruktur umfaßt und wenn ferner ein Tarnmaterial bereitgestellt wird, das wenigstens eine erste Schicht zur Tarnung, vorzugsweise für das sichtbare Spektrum, das nahe, das mittlere und das ferne Infrarot und das Radarwellenspektrum aufweist und wenigstens eine zweite Schicht zum definierten Halten der ersten Schicht umfaßt, werden erstmals universell einsetzbare Tarnmedien zum Tarnen sowohl von kalten, nicht erwärmten als auch von aufgeheizten, wärmeren Objekten geschaffen.

In diesem Zusammenhang wird auch auf die Patentanmeldung 198 16 707.5-15 verwiesen, deren Inhalt unter Bezugnahme vollständig hierin mit aufgenommen wird.

Unter Garnierung wird erfindungsgemäß ein in die Tarnschicht geschnittenes Muster verstanden.

Die beanspruchte Tarnschicht weist insbesondere den Vorteil auf, daß durch ein unter Zugspannunglegen der Verzahnungsstruktur, die Verzahnung aus ihrer Geschlossenheit gelöst wird und sich dabei die Innenzahnung gegenüber der Außenzahnung oder umgekehrt aufstellt. Das gegenseitige Aufstellen wird unter anderem dadurch bewirkt, daß die Zähne an definierten Stellen miteinander verbunden sind und sich insbesondere an den Verbindungsstellen aufgrund dessen relativ zueinander verdrehen bzw. verdrillen. Demgemäß sind die zur Ausbildung der erfindungsgemäßen Garnierung bzw. Verzahnung geführten Schnitte auch als mäandrisch geformt zu bezeichnen.

Das Aufstellen der Verzahnung kann allerdings auch dadurch bewirkt werden, daß die Tarnschicht beispielsweise an einer Kante oder einem sonstigen nicht ebenen Körper gekrümmt wird, wodurch die Zähne ebenfalls relativ zueinander und bezüglich der Schnittfläche aufgestellt werden. Durch den oben beschriebenen Aufstelleffekt der Garnierung werden in höchst vorteilhafterweise insbesondere zwei Ziele verfolgt. Dies ist zum einen eine Verbesserung der optischen Tarnung, indem durch das Aufstellen der Zähne natürliches Ast- oder Blattwerk vorgetäuscht wird und zum anderen, daß durch das in der Regel uneinheitlich starke Aufstellen der Verzahnung die unterschiedlichsten Reflexionswinkel für z.B. Radarstrahlen erzeugbar sind, was den Streueffekt der Tarnschicht wesentlich erhöht. Ferner kann das Aufstellen und Zurückstellen der Verzahnung, abhängig von der Tarnschichtlage und dem Tarnschichtstreckzugstand, zu einer besseren Durchlüftung der erfindungsgemäßen Tarnschicht genutzt werden. Denn durch beispielsweise einfaches Aufklopfen auf die erfindungsgemäße Tarnschicht, wird durch das Öffnen und Schließen der Verzahnung verstärkt Luft von der unter Umständen wärmeren Unterseite der Tarnschicht nach oben geschaffen und somit ein Temperaturausgleich bewirkt.

Im Rahmen einer weiteren vorteilhaften Weiterbildung des Erfindungsgegenstands weisen die Zähne der Verzahnungsstruktur eine pilzartige Form auf. Die Pilzform hat insbesondere den Vorteil, daß über den Pilzkopf eine im Vergleich große Reflexionsfläche wirksam wird. Zudem können die ineinandergreifenden Zähne über die jeweiligen Pilzkopfunterseiten, auf einfache Art und Weise miteinanderverbunden werden. Ferner hat sich in der Praxis gezeigt, daß die Pilzkopfstruktur auch positiven Einfluß auf die thermischen Eigenschaften der Tarnschicht hat, da die durch sie erzeugbare Luftverwirbelung an der Oberfläche der Tarnschicht insbesondere für einen verbesserten Luftabtransport sorgt.

Damit wird der Luftdurchsatz durch die Tarnschicht verbessert. Infolge ist dessen die Temperatur der Tarnschicht von z.B. unter ihr liegenden, wärmeren Objekten kaum beeinflußbar. Somit wird die Tarnfähigkeit von der Temperatur der getarnten Objekte wenig beeinflußt. Ferner wird durch die verbesserte Wärmeabfuhr, wie für den Fachmann offensichtlich, auch ein schnelleres Anpassen an sich verändernde Wetterverhältnisse erreicht. Selbstverständlich können auch andere Zahnstrukturen verwendet werden. Solche können beispielsweise auch Verzahnungen mit Kugelköpfen sein.

Dabei hat es sich bei der erfindungsgemäßen Tarnschicht als besonders vorteilhaft herausgestellt, wenn die Tarnschicht ein polares Gewebe, eine auf das Gewebe aufgebrachte Metallschicht, eine auf die Metallschicht aufgebrachte polare Polymer-Grundierung und eine auf die Grundierung aufgebrachte Tarnlackierung umfaßt. Der Vorteil einer solchen Ausgestaltung der Tarnschicht liegt insbesondere darin begründet, daß ein Durchgreifen der Grundierung auf das polare Gewebe durch die Metallschicht erreicht wird. Eine solche durchgreifende Anordnung ist erfindungsgemäß deshalb möglich, da es sich bei dem verwendeten Gewebe und der verwendeten Grundierung jeweils um ein polares Polymer handelt. Dabei sind die polaren Polymere chemisch haftend miteinander verbunden. Dadurch wird über eine rein adhäsive Wirkung hinaus das direkt auf das polare Gewebe aufgebrachte Metall in etwa filmartig umhüllt und vor mechanischer wie chemischer Trennung wie etwa Ablösung oder Auswaschen geschützt. Zur Einstellung einer solchen Oberflächenverbindung dient die polare Polymer-Grundierung als eine Art Schutzschicht für die vorzugsweise aufgedampfte Metallschicht. Diese Grundierung ist im Infraroten transparent oder zumindest teiltransparent. Erfindungsgemäß wird die Feingewebestruktur in optimaler Weise auf die Metallschicht übertragen, so daß eine Vielzahl von Streudipolen auf der Gewebeoberfläche ausgebildet werden, die zu einer optimalen Streuwirkung der Tarnschicht führen. Zudem wird durch das Ineinandergreifen der Schichten eine Verfestigung der Gewebestruktur bzw. des Schichtaufbaus bewirkt.

Aus Festigkeitsgründen hat es sich bewährt für das Gewebe der Tarnschicht vorzugsweise einen polaren Polyester zu verwenden. Denn Polyester zeichnet sich insbesondere durch ein hohes Maß an chemischer Beständigkeit und durch eine große Festigkeit im Gewebe aus.

Umfaßt die Tarnschicht ein Gewebe aus Baumwolle oder Zellwolle, so wird eine Haftung der Metallschicht auf dem Gewebe vorteilhaft durch die Mikroporosität der Zellwolle oder Baumwolle erreicht. Dabei wird die Metallschicht von Kanälen in den Fäden oder Fasern fest aufgenommen.

Der oben beschriebene Antenneneffekt wird vorteilhaft auch dadurch beeinflußt, daß, wenn bei der Fertigung des Polystergewebes der Tarnschicht, dieses mit einem Titer von 280 dtex, einer Leinwandbindung 1/1 und einer Fadeneinstellung der Kette von vorzugsweise 17,5 Fäden/cm und einem Schuß von 18,5 Fäden/cm hergestellt wird und damit natürlich über diese Fertigungsparameter definierbar ist. Die oben angegebenen Parameter bieten ferner den Vorteil, daß die erfindungsgemäße Tarnschicht eine im Vergleich geringe Masse aufweist. Dadurch sind daraus ganze Overalls herstellbar, deren Masse noch unter ca. 2 kg liegen kann.

Der oben dargestellte Aufbau der Tarnschicht weist ferner in besonders vorteilhafter Weise aufgrund seiner geringen Wärmekapazität, seiner Wärmeableitfähigkeit und seinem hohen Reflexions- bzw. Streuvermögens eine sehr geringe Eigensignatur auf. Dabei bedeutet Eigensignatur im erfindungsgemäßen Sinne, inwieweit das Reflexions- bzw. Emmissionsverhalten des Tarnkörpers vom wechselnden Reflexions- bzw. Emmissionsverhalten der natürlichen Umgebung abweicht. Für die erfindungsgemäße Tarnschicht liegt diese Abweichung kaum detektierbar bei ca. ± 2°C. Ein zeitliches Auflösen des erfindungsgemäß getarnten Objekts durch zeitlich versetzte Messungen z.B. bei unterschiedlichen Sonnenständen oder Wetterverhältnissen, ist daher kaum mehr möglich.

In vorteilhafter Weiterbildung des Erfindungsgegenstandes umfaßt die Tarnschicht ferner ein Mikrobiozid, welches den Vorteil bietet, daß es auf physiologisch unbedenkliche Weise sowohl gegen Bakterien als auch gegen Pilze wirksam ist. Unter unbedenklich ist hierbei zu verstehen, daß die gesetzlich vorgeschriebenen Belastungswerte eingehalten werden, so daß auch Menschen über einen längeren Zeitraum mit der Tarnschicht in Berührung kommen können. Als nachweislich geeignetes Mikrobiozid zur Einhaltung der staatlichen Vorgaben hat sich hierbei Tetrachlor-(methylsulfonat)pyridin bewährt. Tetrachlorpyridin weist aber auch ferner den Vorteil auf, daß es insbesondere in Verbindung mit den verwandten Polymeren besonders gute Wirkeigenschaften besitzt.

Ein weitere vorteilhafte erfindungsgemäße Ausführungsform besteht unter anderem darin, der oben beschriebenen Tarnschicht wenigstens eine zweite Schicht zum definierten Halten der Tarnschicht zuzuordnen. Der Vorteil einer solchen Kombination liegt unter anderem darin begründet, daß hierdurch die Reißfestigkeit der Tarnschicht erhöht wird. Darüber hinaus können über die Verbindung von Tarnschicht und zweiter Schicht Zwischenräume geschaffen werden, die zumindest über ein gewisses Luftpolster verfügen, so daß die von einem zu tarnenden Objekt abgegebene Wärme nicht direkt bzw. nur gedämpft auf die Tarnschicht übertragen wird. Die daraus resultierende Wärmedämmung verhindert dementsprechend die Anpassung der Tarnschicht an die Temperatur des zu tarnenden Körpers und trägt somit zu dessen Delokalisierung bei.

In vorteilhafter Weiterbildung des Erfindungsgegenstands wird die erste Tarnschicht mit der zweiten Schicht über eine Steppnaht verbunden. Das dabei verwendete Garn besteht vorzugsweise ebenfalls aus stark beanspruchbarem Polyester. Der Vorteil eines derartigen Verbindens besteht insbesondere darin, daß unter Abstimmung mit der Garnierungsstruktur ein gezieltes und sicheres Befestigen der zweiten Schicht mit der Tarnschicht möglich ist. Wobei mögliche Schadstoffausdünstungen, die beispielsweise beim Verkleben der Schichten auftreten würden, vermieden werden und wobei durch das Nähen die Tarnwirkung nicht eingeschränkt wird.

Durch das Absteppen der Tarnschicht bezüglich der zweiten Schicht können in höchst vorteilhafter Weise zwischen Tarnschicht und zweiter Schicht Volumina ausgebildet werden, die, wie bereits oben geschildert, für einen gewissen Luftabschluß sorgen und somit in Form von Luftpuffern als thermische Reservoire bzw. Pufferzonen und/oder Isolationspuffer fungieren können.

Bei einer bevorzugten Ausführungsform befinden sich auf der Tarnschicht vorzugsweise parallel zueinander liegende Verzahnungstrukturen, die von nicht-mäandrierten Bereichen abgetrennt sind. Die Steppnähte verlaufen dabei in den Bereichen ohne Garnierung und liegen dementsprechend ebenfalls parallel zueinander. Die abgesteppte Breite der Tarnschicht und der zweiten Schicht, wird dabei jedoch so aufeinander abgestimmt, daß die oben beschriebene Spreizfähigkeit der Verzahnungsstruktur und die damit verbundenen positiven Tarnungseffekte erhalten bleiben. Umgekehrt bedeutet dies aber auch, daß über die zweite Schicht eine Streckgrenze definierbar ist, die in vorteilhafter Weise dazu beiträgt, daß beim Strecken des erfindungsgemäßen Tarnmaterials die Tarnschicht auch bei starker Beanspruchung nicht reißt. Dabei ist der abgesteppte Bereich der zweiten Schicht, der Bereich, der zwischen zwei Nähten liegt, größer als der entsprechende Bereich der Tarnschicht. Die so entstandene Breitendifferenz bestimmt dann im wesentlichen den Streckbereich bzw. die Streckgrenze der Tarnschicht.

Das oben dargestellte Absteppen und das damit verbundene Schaffen von Pufferzonen besitzt neben den bereits erwähnten Vorteilen, die höchst positive Eigenschaft, daß durch das Strecken, Drücken oder durch das Auflegen des Tarnmaterials auf eine Fläche die abgesteppten Volumenbereiche veränderbar sind, so daß hierdurch ein Pumpeffekt bewirkbar ist, der den Luftdurchsatz durch das Tarnmaterial bzw. die Luftkonvektion fördert und so zum Beispiel zu einer verbesserten Abfuhr erwärmter Luft unterhalb des Tarnmaterials führen kann. Die bereitgestellten Pufferzonen bieten insbesondere auch im Zusammenhang mit der bereits oben beschriebenen Garnierung ideale Luftfördereigenschaften, die im wesentlichen jeden Luft-Wärme-Stau unter dem erfindungsgemäßen Tarnmaterial verhindern.

In weiterer höchst vorteilhafter Weiterbildung des Erfindungsgegenstands umfaßt die zweite Schicht ein Netzgewebe. Wobei die Größe der Öffnungen des Netzes vorzugsweise so gestaltet sind, daß zum einen der oben definierte Pumpeffekt erhalten bleibt und zum anderen aber die Luftdurchlässigkeit durch das Tarnmaterial erhöht wird, so daß der Luftdurchsatz und damit die thermische Abfuhr durch das Tarnmaterial noch weiter gesteigert wird. Besonders positiv macht sich das Netzgewebe im Zusammenhang mit der Pumpwirkung beispielsweise dann bemerkbar, wenn das Tarnmaterial für ein Tarnkleidungsstück eingesetzt wird. Da eine Person, die aus dem erfindungsgemäßen Tarnmaterial geschneiderte Tarnkleidung trägt, in der Regel ständig in irgendeiner Weise in Bewegung ist und dabei die Tarnkleidung wechselweise an den Körper gedrückt wird, kann unter besonderer Ausnutzung des erfindungsgemäßen Pumpeffekts erwärmte körpernahe Luft aus der Tarnkleidung schnell und einfach transportiert werden. Ein Wärmestau unter dem Tarnkleidungsstück und eine daraus resultierende Erwärmung des Tarngewebes können dadurch im wesentlichen vermieden werden. Dabei wirkt sich insbesondere auch die dargestellte Verwirbelung aufgrund der pilzförmigen Garnierung positiv aus.

Bei einer besonders bevorzugten Ausführungsform des erfindungsgemäßen Tarnmaterials weist die erste Schicht zwischen den Steppnähten von der zweiten Schicht abgewandte Auswölbungen auf. In vorteilerhafter Weise werden die Auswölbungen durch die Steifigkeit des Tarnmaterials selbst erzeugt. Dieses Tarnmaterial ist vorzugsweise zur Tarnung von Personen vorgesehen. Beim abgesteppten Tarnmaterial beträgt der Abstand der Steppnähte entlang der zweiten Schicht etwa der Hälfte des Abstands, in welchem die Steppnähte angebracht wurden. Die so erreichte Selbstaufspannung oder Auffaltung des Tarnmaterials ergibt mit Vorteil eine erhöhte über Konvektion erreichbare Wärmeabfuhr bzw. -zufuhr. Die parallel zu den Steppnähten laufenden Auswölbungen können etwa bogenförmig sein. Die Erfindung umfaßt aber auch ein Tarnmaterial, bei welchem die Auswölbungen zwischen den Steppnähten spitzwinkelig aufeinandertreffende Flächen aufweisen. Bei einem solchen im Tarnmaterial enthalten die Flächen, welche gleichzeitig Schenkelflächen eines Dreieckes sind, jeweils die Garnierungsstruktur. Erfindungsgemäß erlaubt die Zusammensetzung und/oder die Herstellung die Einstellung von Auswölbungen bzw. Auffaltungen unterschiedlicher Geometrien zwischen den Steppnähten.

Für das Netzgewebe können grundsätzlich verschiedene Materialien wie zum Beispiel Baumwolle eingesetzt werden. Vorzugsweise hat sich jedoch Polyester, aufgrund seiner hohen Beanspruchbarkeit bzw. Festigkeit als besonders geeignet herausgestellt.

Wie bereits oben erwähnt, eignet sich das erfindungsgemäße Tarnmaterial insbesondere zur Verwendung bei einem erfindungsgemäßen Tarnkleidungsstück. Wobei jedoch nicht nur der erwähnte Pumpeffekt nutzbringend eingesetzt werden kann, sondern auch die Eigenschaft der Tarnschicht, daß die Verzahnungsstruktur derart ausgebildet ist, daß auch an gekrümmten Flächen die Zähne, respektive die pilzförmigen Zähne auseinandergespreizt werden und dabei ihre Tarnfähigkeit insbesondere im sichtbaren Bereich und im Radarbereich vollständig entfalten können.

In bevorzugter Weise ist das Tarnmaterial dabei zur Schneiderung eines einteiligen Tarnkleidungsstückes oder eines Anzugs aus Hose und Jacke verwendbar, durch den eine im wesentlichen Ganzkörpertarnung erzielbar ist. Zur Unterstützung der Tarnung bzw. zu deren Perfektionierung weist das erfindungsgemäße Tarnkleidungsstück gesondert geschneiderte Bereiche auf. Solche Bereiche befinden sich im wesentlichen überall dort, wo vom Körper eine erhöhte Wärmeproduktion zu erwarten ist.

Infolge dessen weist das erfindungsgemäße einteilige Tarnkleidungsstück oder der erfindungsgemäße Anzug im Achselbereich je einen Brückenbereich auf, mit dem dort ein häufig auftretender Wärmestau verhindert wird, und auch in diesem Bereich Luftkonvektion stattfindet. Diese Brückenbreiche weisen in der Konfektion des ein- oder zweiteiligen erfindungsgemäßen Tarnkleidungsstücks eine dreiecksähnliche Gestalt auf, die keilförmig in den Achselbereich hineinreicht und so höchst vorteilhaft eine thermische Verbindung bzw. Kopplung zwischen Brust- und Armbereich schaffen.

Um ferner zu verhindern, daß sich beim Tragen des Anzugs auf diesen Wärme überträgt, sind insbesondere dort, wo der Anzug aufgrund der Physiognomie enger am Körper anliegt, Polster eingebracht, die als Zwischenlage zwischen Körper und Anzug wärmeisolierend wirken. Besonders vorteilhaft sind solche Einlagen insbesondere dort, wo die besagten Bereiche mit Bereichen des Körpers zusammenfallen, bei denen eine erhöhte Wärmeabstrahlung zu erwarten ist.

Ohne jegliche Einbußen an Tarnfähigkeit des erfindungsgemäßen Tarnkleidungsstückes, umfaßt dieses ein umfangreiches Reißverschlußsystem, welches sich vorzugsweise auf den Kopf- und/oder den Oberkörper und/oder die Beine und/oder die Arme des ein- oder zweiteiligen Tarnkleidungsstückes erstreckt. Durch dieses Reißverschlußsystem ist es zum einen möglich das Anziehen des Tarnkleidungsstückes insbesondere dann zu erleichtern, wenn, wie in der Regel der Fall, das Tarnkleidungsstück über ein vorhandenes Unterkleid übergezogen wird und zum anderen dienen die Reißverschlüsse dazu, das Tarnkleidungsstück derart zusammenzufalten bzw. -zuschnüren, daß dieses rucksackähnlich tragbar wird. Die Größe des zusammengefaltenen Tarnkleidungsstück ist dabei jedoch derart kompakt, daß dieses auch sehr leicht Aufnahme in einem Rucksack finden kann. Unter Verwendung des erfindungsgemäßen Tarnmaterials umfaßt das Tarnkleidungsstück nur eine Masse von ca. 2 kg.

In einer bezüglich der Reißverschlüsse entsprechenden Doppelfunktion befinden sich, bei einer weiteren bevorzugten Weiterentwicklung des Tarnkleidungsstückes, die sogenannten Kordeln, die vorzugsweise an den Arm- und Beinenden und im Brustbereich am Tarnkleidungsstück angebracht sind. Dabei repräsentieren die Kordeln ein Schnurzugsystem, mit dem Fußoder Beinenden der Tarnkleidung sowohl in ihrer Weite als auch in ihrer Länge reduzierbar sind, so daß der Schnitt des ein- oder zweiteiligen Tarnkleidungsstückes auf unterschiedliche Körpermaße anpaßbar ist. Sie können jedoch in ihrer Doppelfunktion auch dazu verwendet werden, um das Tarnkleidungsstück auf eine kompakte Form zusammenzuschnüren. Ein besonders bevorzugtes Tarnkleidungsstück gemäß der vorliegenden Erfindung ist dadurch gekennzeichnet sich, daß das Tarnmaterial in einem Achselhöhlenbereich und/oder auf Innenseiten der Beinbereiche flach auf das Netzgewebe aufgebracht ist. Dadurch ergibt sich der besondere Vorteil einer geräuschlosen Bewegungsmöglichkeit der das Tarnkleidungsstück tragenden Person.

Die Erfindung sieht ebenfalls ein als Umhang oder Cape geschnittenes Tarnkleidungsstück vor. Dabei ist ein Kapuzenteil ebenfalls entweder fest oder lösbar mit dem Umhang verbunden. Der Tarnumhang weist vorteilhaft im Brustbereich ein als Reiß- oder Klettverschluß wie auch als Knopfleiste ausführbares Verschlußsystem auf.

In einer weiteren vorteilhaften Weiterbildung des erfindungsgemäßen Tarnkleidungsstücks, weist dieses verschließbare Eingriffsöffnungen auf, über die es möglich ist, auf die darunter liegende Kleidung und zum Beispiel deren Taschen zuzugreifen.

Die Erfindung wird nachfolgend anhand bevorzugter Ausführungsformen und unter Bezugnahme auf die beigelegten Zeichnungen beschrieben.

Es zeigen:
- Fig. 1a: eine ausschnittsweise Vorderansicht des erfindungsgemäßen Tarnmaterials in einem ungespannten Zustand,
- Fig. 1b: die Pilzstruktur der Garnierung,
- Fig. 1c: eine Querschnittsdarstellung senkrecht zu den gesteppten Bahnen des erfindungsgemäßen Tarnmaterials,
- Fig. 1d: das erfindungsgemäße Tarnmaterial nach Fig. 1a im gestreckten Zustand,
- Fig. 1e: eine weitere Ausführungsform des erfindungsgemäßen Tarnmaterials in perspektivischer Darstellung,
- Fig. 2a: eine Frontansicht einer Hälfte eines erfindungsgemäßen Tarnkleidungsstückes,
- Fig. 2b: eine Rückansicht einer Hälfte des erfindungsgemäßen Tarnkleidungsstückes gemäß Fig. 2b,
- Fig. 2c: ein Detail der Schulterpartie des erfindungsgemäßen Tarnkleidungsstückes,
- Fig. 2d: einen Teil eines erfindungsgemäßen Tarnkleidungsstückes in zweiteiliger Ausführung in einer Vorderansicht,
- Fig. 2e: eine teilweise Vorderansicht einer weiteren Ausführungsform des erfindungsgemäßen Tarnkleidungstückes.

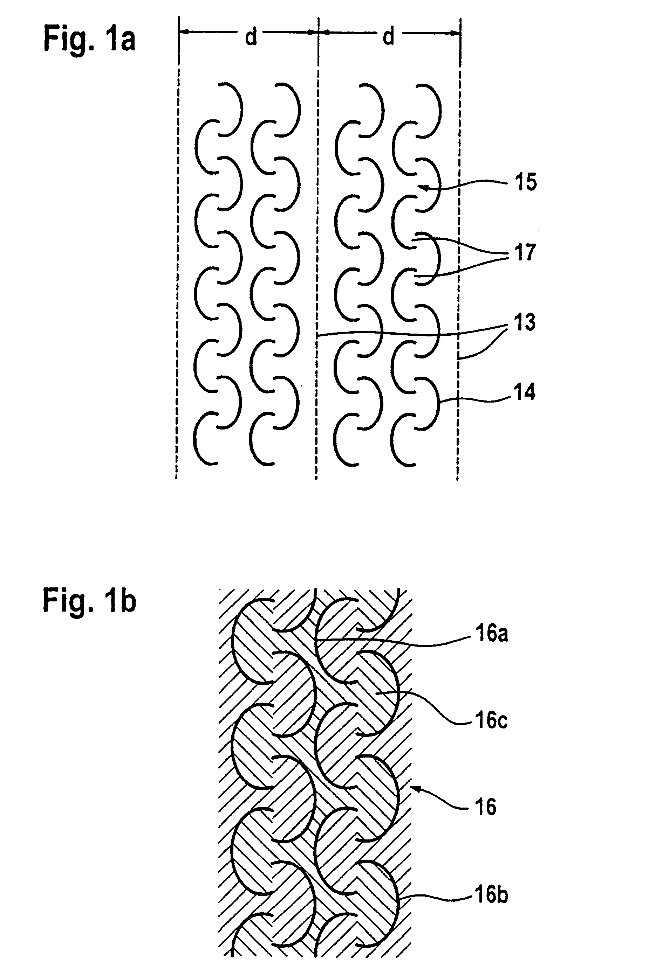

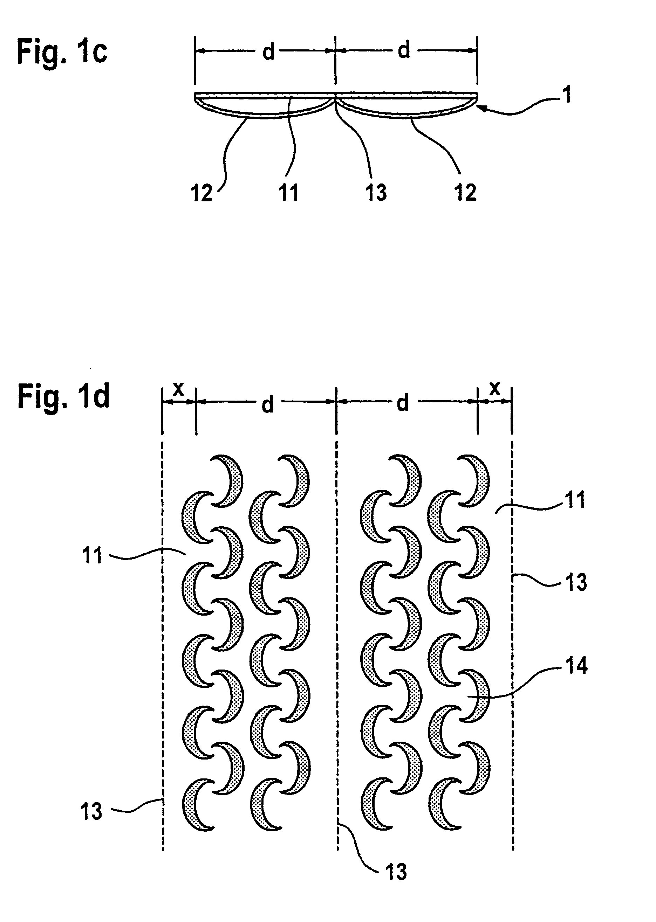

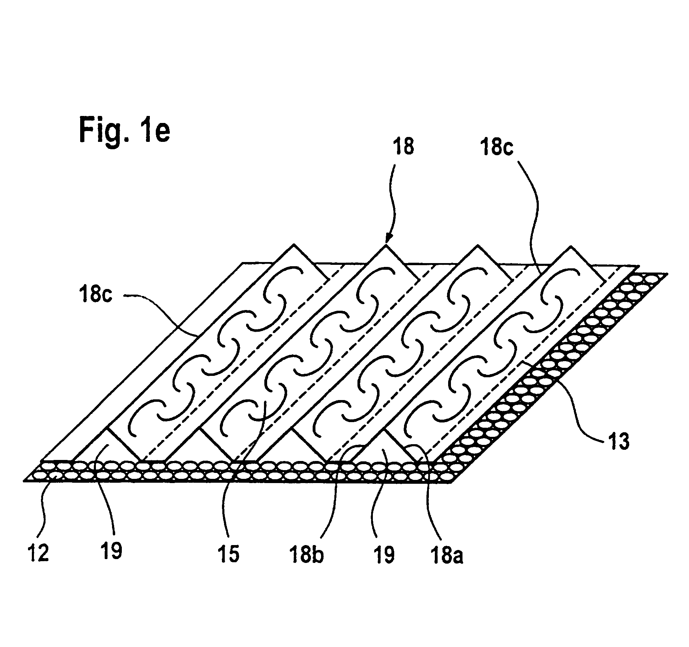

Zuerst wird dabei auf die Figuren 1a, bis 1e Bezug genommen. Fig. 1a zeigt einen Ausschnitt des erfindungsgemäßen Tarnmaterials 1 in einem ungespannten Zustand. Das Tarnmaterial 1 umfaßt eine äußere Materialschicht 11 und eine innere, zum zu tarnenden Objekt gerichtete, Materialschicht 12, siehe Fig. 1. Die beiden Materialschichten 11, 12 sind mittels der Nähte 13 miteinander verbunden, wobei ein abgestepptes Erscheinungsbild des Tarnmaterials 1 entsteht. Durch das Absteppen wird eine Bahnstruktur bzw. werden Felder auf dem Tarnmaterial ausgebildet. Wobei in den Bahnen die geschnittene Garnierung 15 der Tarnschicht 11 verläuft. Das Schnittmuster der Garnierung 15 bildet ein Verzahnungsmuster 14 aus. Wobei die Zähne 16 eine pilzförmige Gestalt aufweisen. Zur Verdeutlichung dieses Sachverhalts sei auf Figur 1b verwiesen, in der die pilzförmige Innen- 16b und Außenzahnung 16a schraffiert gekennzeichnet wurden. Dabei greift die Innenzahnung 16b, die aus einer Kette von wechselweise nach oben und unten ragenden Pilzzähnen gebildet wird, in die Außenzahnung 16a ein. Innen- 16b und Außenzahnung 16a greifen jedoch nicht nur ineinander, sondern sind punktuell an den Übergangs- oder Verbindungsstellen 17 miteinander verbunden. Dies sind im bildlichen Sinne genau die Stellen, an denen die Unterseiten der Pilzköpfe 16c über die Verzahnung in Anlage kommen.

Aus Figur 1c wird deutlich, daß die innere Materialschicht 12 bezüglich der äußeren Tarnschicht 11 derart abgesteppt ist, daß im nicht gestreckten Zustand, d.h. wenn senkrecht zu den Nähten keine Vorspannung am Tarnmaterial 1 anliegt, die innere Materialschicht 12 zwischen den Nähten eine Wölbung formt. Die Größe der Wölbung bestimmt dabei den Luftpuffer der zwischen Tarnschicht und Innenschicht ausgebildet wird. Ferner wird über die abgesteppte Breite der Innenschicht 12 die Streckgrenze d+x bzw. die mögliche Streckbreite x definiert. Die Innenschicht 12 weist dabei vorzugsweise ein Waben- oder Netzgewebe aus Polyester zur besseren Druchlüftung des Tarnmaterials 1 auf.

Im nicht gedehnten Zustand des Tarnmaterials 1, Figur 1a, liegt die pilzartig verzahnte Struktur 14 im wesentlichen mit der Materialschicht 11 in einer Ebene. Greift nun quer zu den Nähten 13 eine Kraft an, so wird die Außenzahnung 16a in Richtung auf die Nähte 13 nach außen gezogen. Wobei über die Verbindungsstellen 17 ein Mitnahmeeffekt auch auf die Innenzahnung 16b erzeugt wird. Da dieser jedoch von beiden Seiten auf die Innenzahnung 16b wirkt, wird dies in ihrer Breite gestreckt. Die Streckung der Innenzahnung 16b greift dabei allerdings kürzer als der gesamte Streckvorgang, so daß zum Ausgleich die Pilzköpfe 16c der Innenzahnung 16b und der Außenzahnung 16a aus ihrer ebenen Lage gehoben werden und sich aufstellen.

Ein Aufstellen der Pilzköpfe 16c wird auch erreicht, wenn das Tarnmaterial an beispielsweise eine schräge Kante gehalten wird, und sich dadurch die Pilzköpfe aus der Ebene des Tarnmaterials heben. Um beide Effekte gleichermaßen realisieren zu können, ist es wichtig, die Übergangsstellen 17 in der richtigen Größe zu wählen, so daß zum einen ein gegenseitiges Verdrillen der Köpfe 16c möglich ist und zum anderen die Steifheit der Verbindung nicht zu groß ist, so daß ein gegenseitiges Aufstellen beim Abknicken möglich bleibt.

Figur 1d zeigt das Tarnmaterial 1 in einem quer zur Steppnaht um x ausgedehnten Zustand. Es ist ersichtlich, daß sich die pilzartige verzahnte Struktur 14 aus ihrer Geschlossenheit gelöst hat, d.h. daß sie sich nach außen aufgerichtet hat. Was aus der Figur nicht ersichtlich ist, ist allerdings der wichtige Sachverhalt, daß sich durch den Streckvorgang der abgesteppte Raumpuffer in seiner Größe verändert hat, wodurch sich eine Art Pumpwirkung einstellt, welche die Luft beschleunigt durch das erfindungsgemäße Tarnnetz befördert.

Eine weitere in Fig. 1e gezeigte Ausführungsform des erfindungsgemäßen Tarnmaterials 1 weist zwischen den Steppnähten 13 zu Dreieckform aufgefaltete Auswölbungen 18 auf. Dabei schneiden sich die Schenkel 18a und 18b der Auswölbungen 18 jeweils in einer parallel zu den Steppnähten 13 verlaufenden firstartigen Falte 18c. Entlang der vorzugsweise als grossmaschiges Netzgewebe ausgebildeten Innenschicht 12 bemessene Abstände 19 der Steppnähte 13 entsprechen etwa der Hälfte der Summe der Breiten der Schenkel 18a und 18b. Die Auswölbungen 18 und die Innenschicht 12 umgeben jeweils zwischen den Steppnähten 13 der Lüftung dienende Hohlräume 19.

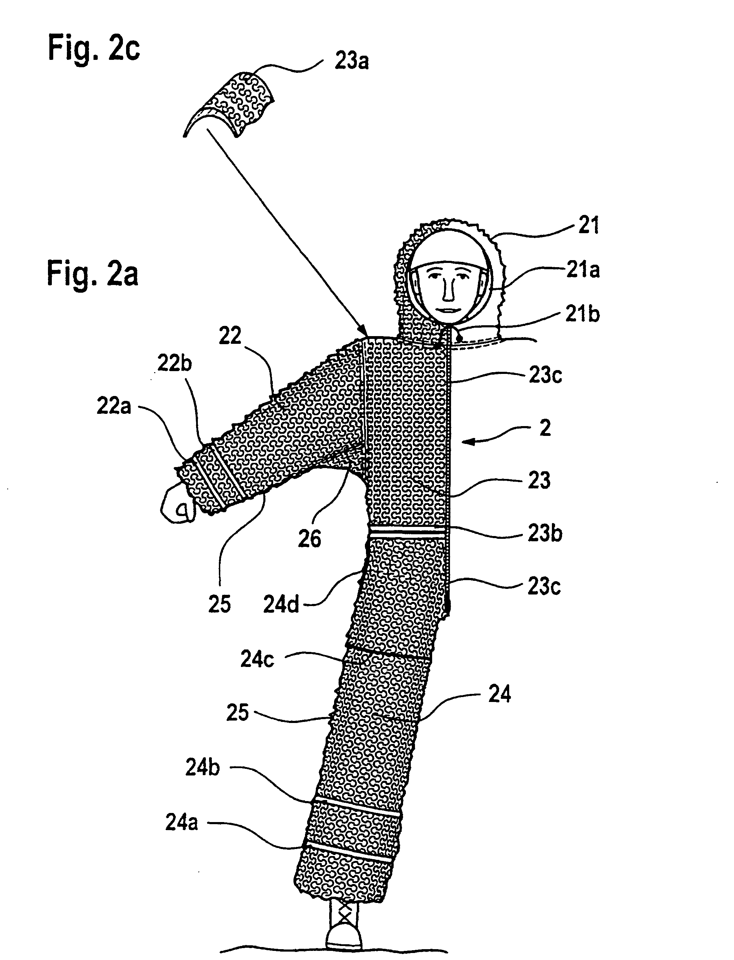

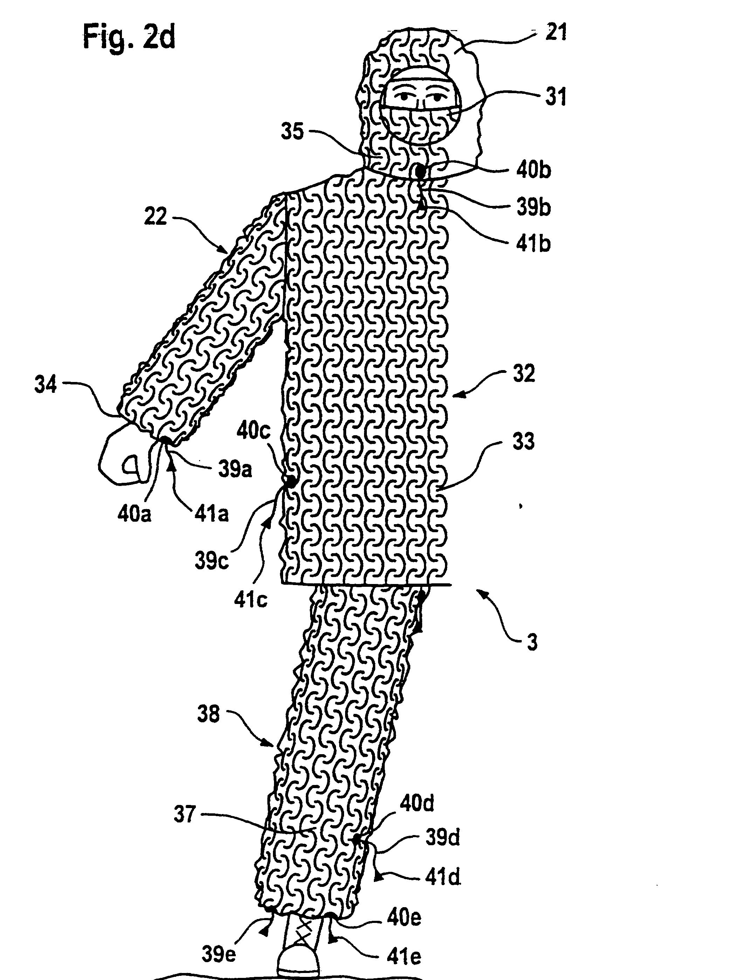

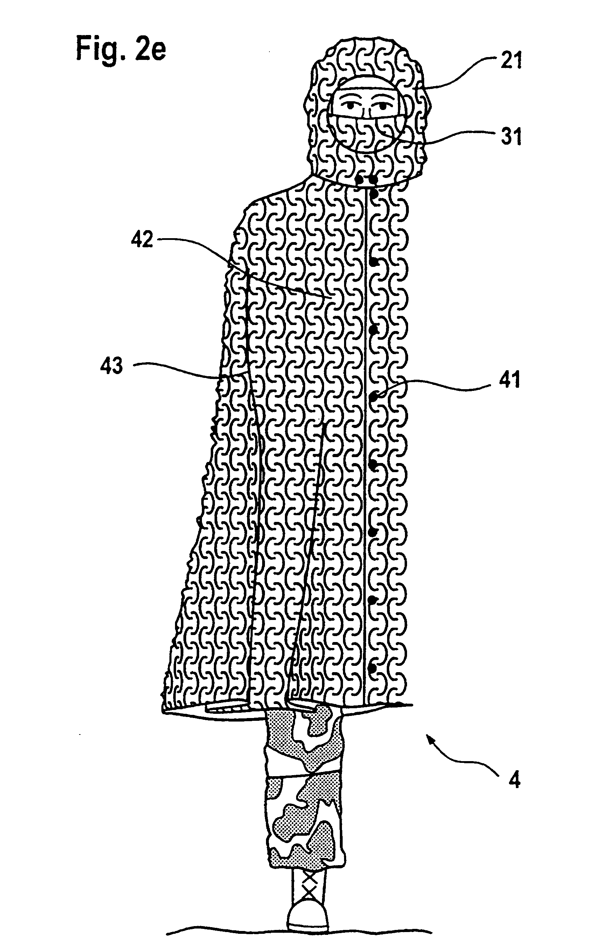

Im folgenden wir auf die Figuren 2a bis 2e Bezug genommen, wobei die Fig. 2a bis 2c in einem anderen Maßstab als die Fig. 2d und 2e dargestellt sind. Fig. 2a zeigt ein aus dem oben beschriebenen Tarnmaterial 1 hergestelltes einteiliges Tarnkleidungsstück 2, mit dem eine außergewöhnlich gute Tarnung sowohl im sichtbaren Bereich, im Infrarot-Bereich als auch im Radarwellenspektrum ermöglicht wird. Fig. 2a zeigt die Vorderansicht eines Teils des gerade erwähnten Tarnkleidungsstückes 2. Wie aus der Zeichnung ersichtlich umfaßt das als Overall ausgebildete Tarnkleidungsstück 2 ein Kapuzenteil 21, zwei Armteile 22, von denen nur eines gezeigt wird, ein Rumpfteil 23, sowie zwei Beinteile 24, von denen wiederum nur eines gezeigt ist. Das Kapuzenteil 21, die Armteile 22 und die Beinteile 24 sind an das Rumpfteil 23 angenäht und damit integral mit diesem verbunden.

Das Kapuzenteil 21 umfaßt eine Sichtöffnung 21a, in deren Öffnungsrand eine Kordel oder Schnur 21b beweglich so eingenäht wurde, daß mit ihrer Hilfe die Kapuzenweite bzw. der Gesichtsfeldbereich verstellt werden kann. Enden der Kordel 21b sind, wie es für diese Fälle bekannt ist, mit einem Aufspleißschutz und einem Kordelstopper versehen, damit die Kordel 21b nicht versehentlich aus der Kordelführung 21a gezogen werden kann. Wie bereits erwähnt, ist vorzugsweise das Kapuzenteil 21 an das Rumpfteil 23 angenäht, es kann aber gegebenenfalls mittels anderer Vorrichtungen, z.B. mittels Klettverschluß oder Reißverschluß oder auf eine andere Weise, an das Rumpfteil 23 angebracht werden.

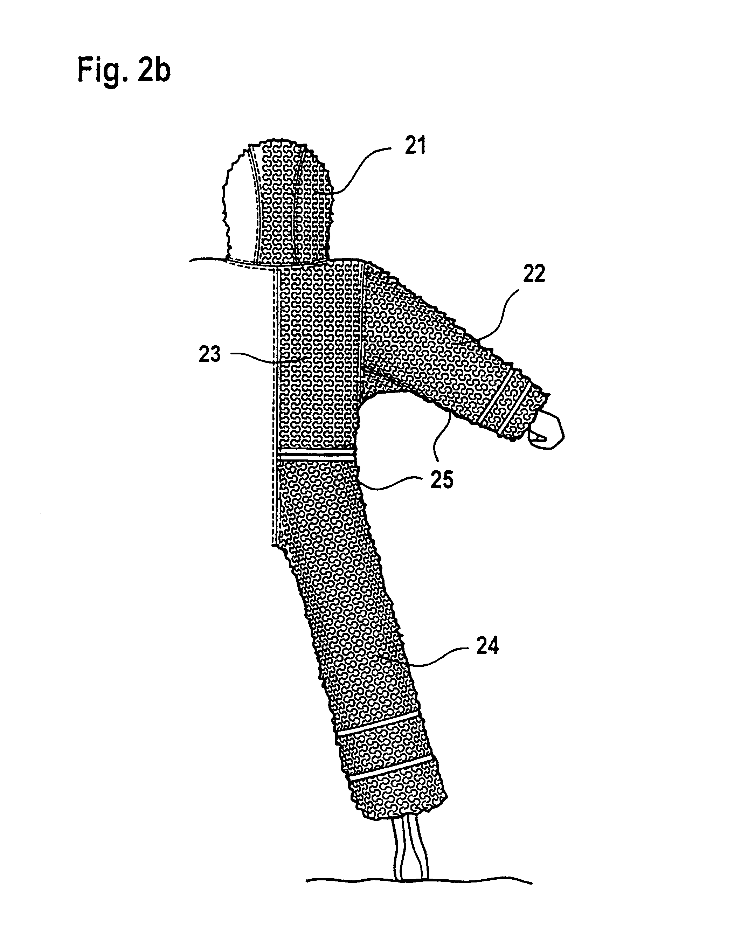

Wie in Figur 2a und 2b zu sehen, werden die Armteile 22 vorzugsweise auf die gleiche Weise an das Rumpfteil 23 angebracht, wie das zuvor beschriebene Kapuzenteil 21. Am Übergang vom Armteil 22 zum Rumpfteil 23 ist das Armteil 22 in Höhe der Achselhöhle vorzugsweise besonders weit geschnitten. Dabei legt die Schnittform in der Achsel einen keilförmigen Ausschnitt 26 fest. Dadurch wird eine thermische Brücke zwischen Arm, Achsel und Körperbereich hergestellt. Indem der Tarnstoff so an der Achsel vorbei geführt wird, kann an dieser im besonderen Maße warmen Stelle kein Wärmestau entstehen kann, der sich dann auf das Tarnmaterial überträgt und zumindest diese Stelle im Infra-Rot-Bild sichtbar macht.

Die zu den Händen gerichteten Enden der Armteile 22 weisen zwei aufgenähte Bänder 22a, 22b auf, durch die jeweils eine Kordel mit Aufspleißschutz und Kordelstopper beweglich durchgeführt wird. Durch Umschlagen der zur Hand gerichteten Enden der Armteile 22 nach innen und zuziehen der Kordeln kann die Länge der Armteile 22 an die Armlänge eines Trägers des Overalls 2 angepaßt werden. Die Armteile 22 umfassen ferner jeweils einen Reißverschluß 25, der sich vom rumpfabgewandten Ende über die ganze Länge der unteren Seite des jeweiligen Armteils 22 über das Rumpfteil 23 bis hin zum Ende des jeweiligen Beinteils 24 erstreckt.

Die Beinteile 24 sind, wie bereits vorstehend beschrieben, einstückig mit dem Rumpfteil 23 in vorteilhafter Weise nahtlos verbunden. Die zu den Füßen gerichteten Enden der Beinteile 24 weisen, wie an den zuvor beschriebenen Armteilen 22, zwei aufgenähte Bänder 24a, 24b auf, durch die jeweils eine Kordel mit Aufspleißschutz und Kordelstopper geführt wird. Durch Umschlagen der den Füßen zugewandten Enden der Beinteile 24 nach innen und Zuziehen der Kordeln kann auch hier die Länge der Beinteile 24 an die Beinlänge eines Trägers des Overalls 2 angepaßt werden. Ferner umfassen die Beinteile 24 im Hüftbereich und an der Oberschenkel-Oberseite, jeweils eine Eingriffsöffnung 24c und 24d, um an die Taschen eine unter dem Overall 2 befindliche, von einem Träger getragene Hose zu gelangen. Die Eingriffsöffnungen sind vorzugsweise mittels Klettverschlüssen verschließbar.

In einer bevorzugten Ausführungsform ist auf der Beininnenseite, etwa im Schritt wie auch im Achselhöhlenbereich, das Tarnmaterial flach auf das Netzgewebe aufgebracht, vorzugsweise aufgenäht.

Das Rumpfteil 23 umfaßt am Schulterabschnitt, d.h. am Übergang vom Kapuzenteil 21 bis hin zu den Armteilen 22 ein am besten in Fig. 2c sichtbares sattelförmiges Schulterpolster 23a, welches vorzugsweise aus gut wärmisolierendem Schaumstoff besteht. Mit Hilfe des Schaumstoffs wird verhindert, daß die dort entwickelte Körperwärme sich auf den an dieser Stelle sehr eng anliegenden Overall 2 direkt übertragen kann. Schaumstoff eignet sich hierzu besonders gut, da er die oben beschriebene Pumpwirkung des Tarnmaterials nicht negativ beeinflußt.

Das Rumpfteil 23 umfaßt etwa in Nabelhöhe ein eingearbeitetes Band 23b, durch das ebenfalls eine Kordel durchgeführt werden kann. Die Enden der Kordel sind wiederum mit einem Aufspleißschutz und einem Kordelstopper versehen. Das Rumpfteil 23 umfaßt ferner einen auf der vorderen Seite angeordneten Reißverschluß 23c, der sich in etwa vom Schritt bis hin zum Kapuzenteil 21 erstreckt, um das Anziehen des Overalls 2 zu erleichtern. Wobei insgesamt das Reißverschlußsystem auch zum verbesserten Zusammenlegen des Overalls 2 dient.

In einer bevorzugten Ausführungsform weist das als Anzug zweiteilig ausgeführte Tarnkleidungsstück 3 nach Fig. 2d einen Gesichtsschutz 31 auf, der im wesentlichen die Mundund Nasenpartie des Trägers verhüllt. Der Gesichtsschutz 31 kann dabei mit einem Klett- oder Reißverschluß an Innenseiten des Kapuzenteils 21 befestigt werden. Denkbar ist aber auch eine feste Nahtverbindung und/oder deren Kombination mit einem Reiß- oder Klettverschluß. Erfindungsgemäß ist es auch vorgesehen, an einer Jacke 32 im Nabelbereich 33 und am handzugewandten Ende 34 des Armteils 22 sowie im Halsabschnitt 35 des Kapuzenteils 21 ein zusätzliches Netzgewebe vorzugsweise aus Baumwolle einzunähen. Ein solches zusätzliches Netzgewebe ist ebenso an Fußenden 36 sowie im Bereich des Unterschenkels 37 einer Hose 38 vorgesehen. Einer Größenanpassung dienende Kordeln 39a bis 39e des Anzugs 3 benutzt werden, werden dann mit dem jeweiligen zusätzlichen Netzgewebe verbunden, vorzugsweise darin eingeflochten. Die Kordeln 39a bis 39e sind jeweils durch Öffnungen 40a bis 40e nach außen geführt. Über Endstücke 41a bis 41e, die an den Kordeln 39a bis 39e angebracht sind, kann ein der Größenanpassung dienender Zug auf die entsprechenden Kordeln ausgeübt werden.

Ebenso sieht die Erfindung ein umhangartiges Tarnkleidungsstück 4 gemäß Fig. 2e vor. Dieser Tarnumhang 4 kann vorzugsweise über eine am Brustabschnitt 42 angebrachte Knopfleiste 41 geschlossen werden. Dieser an seiner Außenseite das erfindungsgemäße Tarnmaterial aufweisende Tarnumhang 4 enthält seitlich angebrachte Durchgriffsöffnungen 43 im unteren Brustabschnitt 42.

Insbesondere bei der Verwendung des erfindungsgemäßen Tarnmaterials für Tarnkleidung kommen alle oben beschriebenen Vorteile der neuartigen Tarnung zum Tragen. Nicht nur daß bei der Bewegung einer Person besonders gut der Pump- bzw. Streckeffekt zum Einsatz kommen, es zeigt sich auch, daß die natürlichen Formen des Körpers die mäanderförmige oder pilzförmige Verzahnung 14 aus ihrer Geschlossenheit lösen und somit zum gewünschten Schutz führen.

Schließlich und endlich versteht sich, daß die einzelnen Merkmale der Erfindung auch in anderen als den beschriebenen Kombinationen verwendet werden können.

## Patentansprüche

1. Tarnschicht (11) zur Tarnung, vorzugsweise für das sichtbare Spektrum, das nahe, das mittlere Infrarot und das ferne Infrarot und das Radarwellenspektrum, **dadurch gekennzeichnet, daß** die Tarnschicht (11) eine Garnierung (15) aufweist und die Garnierung eine Verzahnungsstruktur (14) umfaßt.

2. Tarnschicht nach Anspruch 1, **dadurch gekennzeichnet, daß** der Garnierungsschnitt (15) derart geführt ist, daß durch Strecken und/oder Krümmen der Tarnschicht die Innenzahnung (16b) von der Außenzahnung (16a) abstellbar ist.

3. Tarnschicht nach Anspruch 1 oder 2, **dadurch gekennzeichnet, daß** die Innen- und Außenzahnung (16a) pilzförmig ausgebildet ist.

4. Tarnschicht nach einem der Ansprüche 1 bis 3, **dadurch gekennzeichnet, daß** die Tarnschicht ferner ein polares Gewebe, eine auf das Gewebe aufgebrachte Metallschicht, eine auf die Metallschicht aufgebrachte polare Polymer-Grundierung und eine auf die Grundierung aufgebrachte Tarnlackierung umfaßt.

5. Tarnschicht nach einem der vorhergehenden Ansprüche, **dadurch gekennzeichnet, daß** die Tarnschicht (11) ein polares Gewebe aus einem polaren Polyester umfaßt.

6. Tarnschicht nach Anspruch 5, **dadurch gekennzeichnet, daß** das polare Polyestergewebe einen Titer mit 280 dtex und eine Leinwandbindung 1/1 mit einer Fadeneinstellung der Kette von vorzugsweise 17,5 Fäden/cm und einem Schuß von 18,5 Fäden/cm aufweist.

7. Tarnschicht nach einem der vorhergehenden Anspüche, **dadurch gekennzeichnet, daß** die Tarnschicht (11) ein physiologisch unbedenkliches Mikrobiozid umfaßt, welches sowohl gegen Bakterien als auch gegen Pilze wirksam ist.

8. Tarnmaterial umfassend:
- wenigstens eine erste Schicht (11) zur Tarnung, vorzugsweise für das sichtbare Spektrum, das nahe Infrarot, das mittlere Infrarot und das ferne Infrarot und das Radarwellenspektrum gemäß den Ansprüchen 1 bis 8 und
- wenigstens eine zweite Schicht (12) zum definierten Halten der ersten Schicht (11).

9. Tarnmaterial nach Anspruch 8, **dadurch gekennzeichnet, daß** die zweite Schicht (12) bezüglich der ersten Schicht (11) an vorbestimmten Stellen abgesteppt ist.

10. Tarnmaterial nach Anspruch 8 oder 9, **dadurch gekennzeichnet, daß** durch das Absteppen (13) der ersten Schicht (11) bezüglich der zweiten Schicht (12) in ihrem Volumen veränderbare Luftpufferbereiche ausbildbar sind.

11. Tarnmaterial nach einem der Ansprüche 8 bis 10, **dadurch gekennzeichnet, daß** über die zweite Schicht (12) eine Streckgrenze (x) für die erste Schicht (11) definierbar ist.

12. Tarnmaterial nach einem der Ansprüche 9 bis 11, **dadurch gekennzeichnet, daß** die Garnierungsstruktur (15) in der ersten Schicht(11) zwischen Steppnähten (13) verläuft.

13. Tarnmaterial nach einem der Ansprüche 9 bis 10, **dadurch gekennzeichnet, daß** die erste Schicht (11) zwischen den Steppnähten (13) von der zweiten Schicht (12) abgewandte Auswölbungen (18) aufweist.

14. Tarnmaterial nach Anspruch 13, **dadurch gekennzeichnet, daß** die Auswölbungen (18) zwischen den Steppnähten spitzwinkelig aufeinandertreffende Flächen (18a, 18b) aufweisen.

15. Tarnmaterial nach Anspruch 14, **dadurch gekennzeichnet, daß** die Flächen (18a, 18b) jeweils die Garnierungsstruktur (15) aufweisen.

16. Tarnmaterial nach einem der Ansprüche 8 bis 15, **dadurch gekennzeichnet, daß** die zweite Schicht (12) ein Netzgewebe umfaßt.

17. Tarnmaterial nach einem der Ansprüche 8 bis 16, **dadurch gekennzeichnet, daß** das Netzgewebe vorzugsweise Polyester oder Baumwolle oder vergleichbare Materialien umfaßt.

18. Tarnkleidungsstück, **dadurch gekennzeichnet, daß** es ein Tarnmaterial gemäß den Ansprüchen 8 bis 17 umfaßt.

19. Tarnkleidungsstück nach Anspruch 18, **dadurch gekennzeichnet, daß** das Tarnkleidungsstück einteilig (2) oder als Anzug (32, 38) ausgebildet ist.

20. Tarnkleidungsstück nach Anspruch 18 oder 19, **dadurch gekennzeichnet, daß** es wenigstens einen Brückenbereich (26) zur Abfuhr von thermalisierter Luft aufweist.

21. Tarnkleidungsstück nach einem der Ansprüche 18 bis 20, **dadurch gekennzeichnet, daß** es Isolationsbereiche (23a) zur thermischen Abschirmung aufweist.

22. Tarnkleidungsstück nach einem der Ansprüche 18 bis 21, **dadurch gekennzeichnet, daß** es ein Reißverschlußsystem mit Reißverschlüssen (23c, 25) vorzugsweise im Kopfund/oder Oberkörper- und/oder, Bein- und/oder und Armbereich Reißverschlüsse zum Zusammenfalten und zum Anzugseinstieg umfaßt.

23. Tarnkleidungsstück nach einem der Ansprüche 18 bis 22, **dadurch gekennzeichnet, daß** es ein Schnursystem zur Anpassung des Schnittes des Tarnkleidungsstückes 2 an unterschiedliche Körpermaße aufweist.

24. Tarnkleidungsstück nach einem der Ansprüche 18 bis 23, **dadurch gekennzeichnet, daß** es verschließbare Eingriffsöffnungen (24c, 24d) zum Eingreifen auf ein Unterkleid umfaßt.

25. Tarnkleidungsstück nach einem der Ansprüche 18 bis 24, **dadurch gekennzeichnet, daß** es ein Tarnmaterial nach Anspruch 16 oder 17 umfaßt, und daß das Tarnmaterial in einem Achselhöhlenbereich und/oder auf Innenseiten der Beinbereiche flach auf das Netzgewebe aufgebracht ist.

26. Tarnkleidungsstück nach Anspruch 18, **dadurch gekennzeichnet, daß** das Kleidungsstück als Umhang (4) ausgebildet ist.

27. Tarnkleidungsstück nach Anspruch 26, **dadurch gekennzeichnet, daß** das Kleidungsstück Eingriffsöffnungen (43) und/oder wenigstens ein Verschlußsystem (41) aufweist.

## Claims

1. A camouflage layer (11) for camouflaging, preferably for the visible spectrum, the near infrared, medium infrared and far infrared, and the radar wave spectrum, **characterised in that** the camouflaging layer comprises a decoration (15) and the decoration comprises a toothing structure (14).

2. A camouflage layer according to claim 1, **characterised in that** the decoration cut (15) is so disposed that the inner toothing (16b) is removable from the outer toothing (16a) by stretching and/or bending the camouflage layer.

3. A camouflage layer according to claim 1 or 2, **characterised in that** the inner or outer toothing (16a) is mushroom-shaped.

4. A camouflage layer according to any one of claims 1 to 3, **characterised in that** the camouflage layer also comprises a polar fabric, a metal layer applied to the fabric, a polar polymer primer applied to the metal layer and a camouflage paint applied to the primer.

5. A camouflage layer according to any one of the preceding claims, **characterised in that** the camouflage layer (11) comprises a polar fabric of a polar polyester.

6. A camouflage layer according to claim 5, **characterised in that** the polar polyester fabric has a titre with 280 dtex and a 1/1 linen weave with a warp yarn setting of preferably 17.5 yarns/cm and a weft of 18.5 yarns/cm.

7. A camouflage layer according to any one of the preceding claims, **characterised in that** the camouflage layer (11) comprises a physiologically unobjectionable microbiocide which is active against both bacteria and fungi.

8. A camouflage material comprising:
- at least one first layer (11) for camouflaging, preferably for the visible spectrum, the near infrared, the medium infrared and the far infrared, and the radar wave spectrum according to claims 1 to 8 and
- at least one second layer (12) for the defined holding of the first layer (11).

9. A camouflage material according to claim 8, **characterised in that** the second layer (12) is quilted off from the first layer (11) at predetermined places.

10. A camouflage material according to claim 8 or 9, **characterised in that** air cushion zones of variable volume can be formed by the quilting (13) of the first layer (11) relatively to the second layer (12).

11. A camouflage material according to any one of claims 8 to 10, **characterised in that** a stretching limit (x) for the first layer (11) is definable via the second layer (12).

12. A camouflage material according to any one of claims 9 to 11, **characterised in that** the decoration structure (15) extends in the first layer (11) between quilting seams (13).

13. A camouflage material according to any one of claims 9 to 10, **characterised in that** the first layer (11) has outward formations (18) remote from the second layer (12) between the quilting seams (13).

14. A camouflage material according to claim 13, **characterised in that** the outward formations (18) have surfaces (18a, 18b) which meet at an acute angle between the quilting seams.

15. A camouflage material according to claim 14, **characterised in that** the surfaces (18a, 18b) each have the decoration structure (15).

16. A camouflage material according to any one of claims 8 to 15, **characterised in that** the second layer (12) comprises a netting fabric.

17. A camouflage material according to any one of claims 8 to 16, **characterised in that** the netting fabric preferably comprises polyester or cotton or comparable materials.

18. A camouflage garment, **characterised in that** it comprises a camouflage material according to claims 8 to 17.

19. A camouflage garment according to claim 18, **characterised in that** the camouflage garment is constructed in one piece or as a suit (32, 38).

20. A camouflage garment according to claim 18 or 19, **characterised in that** it comprises at least one bridge zone (26) to dissipate thermalised air.

21. A camouflage garment according to any one of claims 18 to 20, **characterised in that** it comprises insulation zones (23a) for thermal screening.

22. A camouflage garment according to any one of claims 18 to 21, **characterised in that** it comprises a sliding clasp fastener system with sliding clasp fasteners (23c, 25) preferably in the head, and/or upper body and/or leg and/or arm region for folding together and for entry into the suit.

23. A camouflage garment according to any one of claims 18 to 22, **characterised in that** it comprises a cord system for adapting the cut of the camouflage

24. A camouflage garment according to any one of claims 18 to 23, **characterised in that** it comprises closable engagement openings (24c, 24d) for engagement on an undergarment.

25. A camouflage garment according to any one of claims 18 to 24, **characterised in that** it comprises a camouflage material according to claim 16 or 17, and **in that** the camouflage material is applied flat to the netting fabric in an armpit zone and/or on insides of the leg zones.

26. A camouflage garment according to claim 18, **characterised in that** the garment is constructed in the form of a cape (4).

27. A camouflage garment according to claim 26, **characterised in that** the garment has engagement openings (43) and/or at least one fastener system (41).

## Revendications

1. Couche de camouflage (11) destinée à rendre indécelable, de préférence pour le spectre visible, l'infrarouge proche, l'infrarouge moyen et l'infrarouge lointain, ainsi que le spectre des radars, **caractérisée en ce que** la couche de camouflage (11) comporte un garnissage (15) et le garnissage est constitué d'une structure à imbrications (14).

2. Couche de camouflage selon la revendication 1, **caractérisée en ce que** la coupe du garnissage (15) est effectuée de telle sorte que, à la suite d'un étirement et/ou d'un gondolement de la couche de camouflage, la partie d'imbrication intérieure (16b) peut se détacher de la partie d'imbrication extérieure (16a).

3. Couche de camouflage selon la revendication 1 ou 2, **caractérisée en ce que** la partie d'imbrication intérieure (16b) et l'entrelacement extérieur (16a) sont conçus en forme de champignon.

4. Couche de camouflage selon l'une quelconque des revendications 1 à 3, **caractérisée en ce que** la couche de camouflage comporte en outre un textile polaire, une couche métallique déposée sur le textile, une couche de fond en polymère polaire déposée sur la couche métallique et un vernis de camouflage déposé sur la couche de fond.

5. Couche de camouflage selon l'une quelconque des revendications précédentes, **caractérisée en ce que** la couche de camouflage (11) contient un textile polaire réalisé en polyester polaire.

6. Couche de camouflage selon la revendication 5, **caractérisée en ce que** le textile polyester polaire présente un titre de 280 dtex et une armure toile 1/1 avec, de préférence, un compte en fils de 17,5 fils de chaîne par cm et un compte en duites de 18,5 fils de trame par cm.

7. Couche de camouflage selon l'une quelconque des revendications précédentes, **caractérisée en ce que** la couche de camouflage (11) comporte un microbiocide physiologiquement neutre, qui est actif aussi bien contre les bactéries que contre les champignons.

8. Matière de camouflage comprenant :
- au moins une première couche (11) destinée à rendre indécelable, de préférence, pour le spectre visible, l'infrarouge proche, l'infrarouge moyen et l'infrarouge lointain, ainsi que le spectre des radars selon les revendications 1 à 8, et
- au moins une deuxième couche (12) pour retenir de manière définie la première couche (11).

9. Matière de camouflage selon la revendication 8, **caractérisée en ce que** la deuxième couche (12) est piquée par rapport à la première couche (11) dans des zones prédéfinies.

10. Matière de camouflage selon la revendication 8 ou 9, **caractérisée en ce que** le piquage (13) de la première couche (11) par rapport à la deuxième couche (12) permet de réaliser des zones de matelas d'air à volume variable.

11. Matière de camouflage selon l'une quelconque des revendications 8 à 10, **caractérisée en ce qu'**une limite d'allongement (x) pour la première couche (11) peut être définie par l'intermédiaire de la deuxième couche (12).

12. Matière de camouflage selon l'une quelconque des revendications 9 à 11, **caractérisée en ce que** la structure du garnissage (15) s'étend dans la première couche (11) entre les coutures piquées (13).

13. Matière de camouflage selon l'une quelconque des revendications 9 à 10, **caractérisée en ce que** la première couche (11) comporte entre les coutures piquées (13) des bombements (18) opposés à la deuxième couche (12).

14. Matière de camouflage selon la revendication 13, **caractérisée en ce que** les bombements (18) entre les coutures piquées sont formés par des surfaces (18a, 18b) qui convergent en angle aigu.

15. Matière de camouflage selon la revendication 14, **caractérisée en ce que** les surfaces (18a, 18b) comportent chacune la structure (15) du garnissage.

16. Matière de camouflage selon l'une quelconque des revendications 8 à 15, **caractérisée en ce que** la deuxième couche (12) contient un tissu fileté.

17. Matière de camouflage selon l'une quelconque des revendications 8 à 16, **caractérisée en ce que** le tissu fileté contient de préférence du polyester ou du coton ou des matières similaires.

18. Vêtement de camouflage **caractérisé en ce qu'**il est formé d'une matière de camouflage selon les revendications 8 à 17.

19. Vêtement de camouflage selon la revendication 18, **caractérisé en ce que** le vêtement de camouflage est réalisé sous forme de combinaison (2) ou sous forme d'ensemble veste-pantalon (32, 38).

20. Vêtement de camouflage selon la revendication 18 ou 19, **caractérisé en ce qu'**il comporte au moins une zone à gousset (26) pour évacuer l'air thermalisé.

21. Vêtement de camouflage selon l'une quelconque des revendications 18 à 20, **caractérisé en ce qu'**il comporte des zones d'isolation (23a) formant une barrière thermique.

22. Vêtement de camouflage selon l'une quelconque des revendications 18 à 21, **caractérisé en ce que**, pour plier et enfiler l'ensemble veste-pantalon, il comporte un système de fermeture avec des fermetures à glissière (23c, 25), de préférence des fermetures à glissière dans la partie de la tête, et/ou dans la partie du buste et/ou dans la partie des manches et des jambes.

23. Vêtement de camouflage selon l'une quelconque des revendications 18 à 22, **caractérisé en ce qu'**il comporte un système de cordon pour ajuster la coupe du vêtement de camouflage (2) à différentes tailles.

24. Vêtement de camouflage selon l'une quelconque des revendications 18 à 23, **caractérisé en ce qu'**il comporte des ouvertures d'accès (24c, 24c) pouvant être fermées, pour pouvoir saisir un vêtement passé en dessous.

25. Vêtement de camouflage selon l'une quelconque des revendications 18 à 24, **caractérisé en ce qu'**il comporte une matière de camouflage selon la revendication 16 ou 17, et **en ce que** la matière de camouflage est déposée à plat sur le tissu fileté dans la zone du creux de l'aisselle et/ou sur les faces intérieures des zones de jambe.

26. Vêtement de camouflage selon la revendication 18, **caractérisé en ce que** le vêtement est conçu sous forme de pèlerine (4)

27. Vêtement de camouflage selon la revendication 26, **caractérisé en ce que** le vêtement comporte des ouvertures d'accès (43) et/ou au moins un système de fermeture (41).
